(19) Europäisches Patentamt
European Patent Office
Office européen des brevets

(11) EP 0 872 387 B1

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(51) Int Cl.$^7$: **B60R 21/00**, B60R 21/32

(21) Anmeldenummer: **98106139.3**

(22) Anmeldetag: **03.04.1998**

(54) **Verfahren zur richtungsselektiven Ausrichtung einer passiven Sicherheitseinrichtung**

Method for adjusting the orientation of a passive safety system

Méthode d'ajustement de l'orientation d'un système de sécurité passive

(84) Benannte Vertragsstaaten:
**DE ES FR GB IT SE**

(30) Priorität: **15.04.1997 DE 19715575**

(43) Veröffentlichungstag der Anmeldung:
**21.10.1998 Patentblatt 1998/43**

(73) Patentinhaber: **Conti Temic microelectronic GmbH**
**90411 Nürnberg (DE)**

(72) Erfinder:
- **Baur, Richard**
  **85276 Paffenhofen (DE)**
- **Held, Christian**
  **86529 Schrobenhausen (DE)**
- **Küblbeck, Hermann**
  **86529 Schrobenhausen (DE)**
- **Steurer, Helmut**
  **85302 Gerolsbach (DE)**
- **Wöhrl, Alfons**
  **86529 Schrobenhausen (DE)**

(74) Vertreter: **Maute, Hans-Jürgen, Dipl.-Ing.**
**Daimler-Benz Aktiengesellschaft,**
**FTP/H,**
**Postfach 35 35**
**74025 Heilbronn (DE)**

(56) Entgegenhaltungen:
**EP-A- 0 649 777**
**WO-A-94/12886**
**DE-A- 3 736 294**
**DE-A- 19 537 546**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren sowie eine zugehörige Vorrichtung zur richtungsselektiven Auslösung einer passiven Sicherheitseinrichtung in einem Fahrzeug, insbesondere eines Airbag-Systems, im Falle eines Aufpralls des Fahrzeugs, mit mindestens zwei Beschleunigungsaufnehmern mit gerichteten Empfindlichkeitsachsen, wobei die Empfindlichkeitsachsen in unterschiedlichen Richtungen ausgerichtet sind, und mit einer Auswerteeinrichtung, die die von den Beschleunigungsaufnehmern kommenden Signale aufnimmt, verarbeitet und Ausgangssignale zur Auslösung der passiven Sicherheitseinrichtung bereitstellt.

Die Erfindung betrifft außerdem ein Verfahren zur Bestimmung der Faktoren. Verfahren und Vorrichtungen Vorrichtung zur richtungsselektiven Auslösung einer passiven Sicherheitseinrichtung in einem Fahrzeug sind beispielsweise aus DE 37 17 427, DE 37 33 837 C2, DE 41 16 336 C1 und gattungsbildender WO-A-94 12886 bekannt.

Zum passiven Schutz von Fahrzeuginsassen werden heutzutage praktisch alle neuen Automobilmodelle mit Airbags ausgerüstet, die bei einem Aufprall in sehr kurzer Zeit mit Gas aufgeblasen werden und den dahinter sitzenden Insassen vor den Folgen eines Aufpralls schützen sollen bzw. die Unfallfolgen erheblich mildern.

Die optimale Auslösezeit für Airbags ist u.a. auch eine Funktion des Winkels, mit dem das Fahrzeug auf ein Hindernis oder auf ein entgegenkommenden Fahrzeug aufprallt. Dies kann bei Auslösegeräten für Airbags oder andere passive Sicherheitseinrichtungen, wie beispielsweise Gurtstrammer, mit zwei Beschleunigungsaufnehmern in der Regel berücksichtigt werden. Allerdings verfälschen Winkeltoleranzen bei der Herstellung der Beschleunigungsaufnehmer, beim Einbau der Beschleunigungsaufnehmer auf eine Platine, beim Einbau der Platine in ein Gerätegehäuse sowie bei der Montage des Geräts im Fahrzeug die Genauigkeit der Winkelinformation, so daß das Optimum des Auslösezeitpunkts nicht erreicht werden kann.

Die Richtungsempfindlichkeit der beschleunigungsempfindlichen Elemente, beispielsweise piezoelektischer Komponenten, ist prinzipiell in der Regel recht gut. Die Unsicherheit im Meßergebnis kommt hingegen im allgemeinen von den Ungenauigkeiten bei der Montage der beschleunigungsempfindlichen Elemente im Gehäuse des Beschleunigungsaufnehmers, des Beschleunigungsaufnehmers auf der Platine, der Platine im Gehäuse und des fertigen Geräts im Fahrzeug. Der Irrtum bei der Messung kommt dabei weniger durch eine Verfälschung eines Signals zustande, das in Richtung der maximalen Empfindlichkeit der Beschleunigungsaufnehmer wirkt. Vielmehr werden diejenigen Signalanteile am stärksten verfälscht, die senkrecht daran anliegen. Diese Größe wird in den Datenblättern meist als Querempfindlichkeit bezeichnet, bedeutet aber in fast allen Fällen nichts anderes als den Winkel, mit dem das beschleunigungsempfindliche Element gegenüber dem Nominalwinkel seiner gerichteten Empfindlichkeitsachse verdreht eingebaut sein kann.

Die Herstellung von Beschleunigungsaufnehmern mit ausreichend geringer Winkeltoleranz sowie eine entsprechend genaue Montage im Gerät und im Fahrzeug hat einen ganz erheblichen Aufwand zur Folge. Daher sind die bekannten Vorrichtungen entweder in Ihren Herstellung teuer, weil Bauteile mit besonders genauer Winkelempfindlichkeit verwendet werden müssen, oder ihr Einbau ist aufwendig und damit wiederum teurer, weil bei der Verwendung von weniger genauen Bauteilen ein sehr genauer Abgleich der Empfindlichkeit und eine Kompensation der Winkeltoleranz nach dem Einbau vorgenommen werden müssen.

Aufgabe der vorliegenden Erfindung ist es demgegenüber, eine Vorrichtung mit den eingangs beschriebenen Merkmalen vorzustellen, bei der der Fertigungsaufwand gegenüber bekannten Vorrichtungen reduziert werden kann, ohne daß gleichzeitig die Meßgenauigkeit der Vorrichtung verringert wird, und bei der insbesondere auch mit Beschleunigungsaufnehmern, die erheblich größere Winkeltoleranzen aufweisen, eine hohe Meßgenauigkeit erzielt wird, wobei der Abgleich der Empfindlichkeit und die Kompensation der Winkeltoleranz gleichzeitig in einem unaufwendigen Arbeitsgang erledigt werden können.

Erfindungsgemäß wird diese Aufgabe auf ebenso überraschend einfache wie wirkungsvolle Art und Weise dadurch gelöst, daß die Auswerteeinrichtung eine elektronische Schaltung umfaßt, die die von $n \geq 2$ Beschleunigungsaufnehmern kommenden n Signale am 1, am 2, ... am n in n Ausgangssignale a(I), a(II), ... a(n) umwandelt, wobei die Ausgangssignale a(I), a(II), ... a(n) Linearkombinationen der ankommenden Signale am 1, am 2, ... am n mit einstellbaren Faktoren $c_{ij}$ sind:

$$a(I) = c_{11} * am\,1 + c_{12} * am\,2 + ... + c_{1n} * am\,n$$

$$a(II) = c_{21} * am\,1 + c_{22} * am\,2 + ... + c_{2n} * am\,n$$

.....

$$a(n) = c_{n1} * am\,1 + c_{n2} * am\,2 + ... + c_{nn} * am\,n.$$

Die zu bewertenden Beschleunigungssignale aus den Beschleunigungsaufnehmern werden bei der erfindungsgemäßen Vorrichtung nicht direkt zum Zwecke der Auslösung der passiven Sicherheitseinrichtung weitergereicht. Es wird auch nicht, wie beispielsweise in der oben zitierten DE 37 17 427 A1 die Amplitude des jeweiligen Signals in einer Bewertungsschaltung bewertet, oder, wie in der DE 37 33 837 C2 beschrieben, eine Auswahl bestimmter Signale getroffen, während andere unterdrückt werden, und es erfolgt auch keine Abtastung der Signalform um Anstiegsflanken oder Schwellwerte zu bestimmen, wie in der DE 41 16 336 C1 vorgeschlagen ist. Vielmehr wird bei der erfindungsgemäßen Vorrichtung aus den eingehenden n Signalen von den n Beschleunigungsaufnehmern eine entsprechende Anzahl von n Ausgangssignalen gebildet, die jeweils aus einer bestimmten Linearkombination aller eingehenden Signale bestehen. Die Faktoren $c_{ij}$, mit denen die Eingangssignale anteilig in die Ausgangssignale eingehen, sind einstellbar. Dadurch kann mit der erfindungsgemäßen Vorrichtung, wie weiter unten beschrieben ist, in einer einfachen Prozedur eine Winkelkorrektur und gleichzeitig eine Empfindlichkeitsjustage durch Einstellung der entsprechenden Faktoren $c_{ij}$ erfolgen.

Besonders bevorzugt ist eine Ausführungsform der erfindungsgemäßen Vorrichtung, bei der die elektronische Schaltung einen Analog-Digital-Wandler (ADC) zur Digitalisierung der n von den Beschleunigungsaufnehmern kommenden Signale am 1, am 2, ... am n sowie einen Mikroprozessor zur Umwandlung der digitalisierten Signale in die n Ausgangssignale a(I), a(II), ... a(n) umfaßt. Insbesondere, wenn die Digitalisierung der Signale in räumlicher Nähe zu den Beschleunigungsaufnehmern erfolgt, können die Signale auch über relativ große Strecken verzerrungsfrei transportiert werden. Die Bildung der Ausgangssignale als Linearkombination der digitalisierten Eingangssignale kann schnell und problemlos in einem Mikroprozessor erfolgen.

Vorteilhaft ist eine Weiterbildung dieser Ausführungsform, bei der der Mikroprozessor mit einer Speichereinheit verbunden ist, in welcher die einstellbaren Faktoren $c_{ij}$ als digitalisierte Daten abgespeichert sind. Damit kann der Mikroprozessor in kürzester Zeit die gewünschten Linearkombinationen erzeugen.

Besonders vorteilhaft ist eine Weiterbildung, bei der die Speichereinheit eine oder mehrere EEPROM-Einheiten enthält. Damit kann die Speichereinheit jederzeit durch elektrische Impulse mit einem beliebigen Satz von Faktoren $c_{ij}$ beschrieben bzw. überschrieben werden, ohne daß zum Halten der Daten ständig eine elektrische Spannung bereitgestellt werden müßte, wie dies beispielsweise bei einem RAM-Speicher der Fall wäre.

Alternativ ist eine Ausführungsform, bei der die elektronische Schaltung eine Analogschaltung ist, die insbesondere mehrere Operationsverstärker umfaßt. Anstelle einer digitalen Verarbeitung kann mit sehr einfachen elektronischen Bauelementen nämlich auch eine analoge Auswertung und Umwandlung der eingehenden Signale in Ausgangssignale, die aus Linearkombinationen der Eingangssignale bestehen, erfolgen.

Besonders einfach darstellbar ist eine Weiterbildung dieser Ausführungsform, bei der die Faktoren $c_{ij}$ durch abstimmbare Ohm'sche Widerstände $R_{ij}$ eingestellt werden können.

In den Rahmen der Erfindung fällt auch ein Verfahren zur Korrektur von Winkel- und/oder Empfindlichkeitsfehlern bei Beschleunigungsaufnehmern in einer Vorrichtung der oben beschriebenen Art, das folgende Verfahrensschritte aufweist:

- sequentielle Eingabe von n bekannten Beschleunigungssignalen in n verschiedenen Richtungen in die n Beschleunigungsaufnehmer und Messung der daraus resultierenden n x n Ausgangssignale $a(I)_1$, $a(I)_2$, ... $a(I)_n$; $a(II)_1$, $a(II)_2$, ... $a(II)_n$; ...; $a(n)_1$, $a(n)_2$, ... $a(n)_n$
- Bestimmung der Faktoren $c_{ij}$ aus den gemessenen Ausgangssignalen gemäß

$$\{c_{ij}\} = \{\mathbf{R}_{ij}\} \begin{Bmatrix} a(I)_1 & \ldots & a(I)_n \\ \vdots & \vdots & \vdots \\ a(n)_1 & \ldots & a(n)_n \end{Bmatrix}^{-1}$$

wobei $\{c_{ij}\}$ eine aus den Faktoren $c_{ij}$ aufgebaute n x n-Matrix und eine Korrektur-matrix $\{\mathbf{R}_{ij}\}$ die vorgegebenen theoretischen, bei den bekannten Beschleunigungssignalen ideal zu erwartenden Werte sind. Liegen orthogonale Beschleunigungssignale gleicher Amplitude vor, vereinfacht sich $\{\mathbf{R}_{ij}\}$ zur Einheitsmatrix {E}.

Die Erfindung ist in der Zeichnung dargestellt und wird anhand von Ausführungsbeispielen näher erläutert. Es zeigen:

Fig. 1 ein Schaltschema für eine analoge Realisierung der erfindungsgemäßen Vorrichtung;

Fig. 2 ein Schaltschema einer digitalen Version der erfindungsgemäßen Vorrichtung; und

Fig. 3 die Richtungscharakteristik eines idealen und ideal eingebauten Beschleunigungsaufnehmers im Vergleich zu einem realen und/oder toleranzbehaftet eingebauten Beschleunigungsaufnehmer.

In Fig. 3 ist schematisch die oben diskutierte Problematik von Winkelfehlern beim Betrieb eines Beschleunigungsaufnehmers mit gerichteter Empfindlichkeitsachse graphisch dargestellt. Im gezeigten Beispiel ist mit einem durchgezogenen Kreis die Richtungscharakteristik eines idealen und ideal eingebauten Beschleunigungsaufnehmers in Richtung einer x-Achse gezeigt. Durch Toleranzen des Aufnehmers und einen nicht-idealen Einbau kommt es zu einem Winkelfehler, was in Fig. 3 gestrichelt dargestellt ist. Wenn ein derartiger fehlerbehafteter, realer Beschleunigungsaufnehmer dennoch halbwegs brauchbare Signaldaten liefern soll, muß er in der Regel in einer aufwendigen Prozedur bezüglich seiner Winkelund Empfindlichkeitsfehler nach dem Endeinbau in das betreffende Gerät oder Fahrzeug abgeglichen bzw. kompensiert werden. Um diesen Vorgang erheblich zu vereinfachen, wird erfindungsgemäß vorgeschlagen, daß eine Vorrichtung zur richtungsselektiven Auslösung einer passiven Sicherheitseinrichtung in einem Fahrzeug, die mindestens zwei Beschleunigungsaufnehmer mit gerichteten Empfindlichkeitsachsen enthält, eine Auswerteeinrichtung aufweist, die die von den Beschleunigungsaufnehmern ankommenden Signale aufnimmt und als Ausgangssignale daraus Linearkombinationen der ankommenden mit einstellbaren Faktoren $c_{ij}$ bildet. Damit können in einem Arbeitsschritt sowohl Empfindlichkeitsabweichungen der Beschleunigungsaufnehmer sowie sämtliche Winkeltoleranzen innerhalb des Gehäuses der Auslösegerätes gleichzeitig kompensiert werden.

Im folgenden wird die Erfindung lediglich für den Fall von n = 2 Beschleunigungsaufnehmern erläutert, deren Empfindlichkeitsachsen in einer x-Richtung bzw. in einer y-Richtung verlaufen sollen, wobei die x-Achse auf der y-Achse senkrecht stehen soll. Eine höhere Anzahl von Beschleunigungsaufnehmern ist z.B. zur Erfassung von Fahrzeugüberschlägen denkbar und die Anpassung der erfindungsgemäßen Verfahren und Vorrichtung möglich.

Die zu bewertenden Beschleunigungen werden nun nicht wie beim Stand der Technik direkt aus den Signalen der Beschleunigungsaufnehmer gewonnen, sondern erfindungsgemäß durch eine Linearkombination derselben.

$$a(I) := c_{11} * am\ 1 + c_{12} + am\ 2$$

$$a(II) := c_{21} * am\ 1 + c_{22} * am\ 2 \qquad (1)$$

Dabei sind $c_{ij}$ noch zu bestimmende, einstellbare Faktoren, am 1 und am 2 die Beschleunigungssignale der beiden Beschleunigungsaufnehmer, die, wie oben beschrieben, mit Winkelfehlern behaftet montiert sind. Die verarbeiteten, aus der Auswerteeinrichtung herauskommenden Signale zur Auslösung der passiven Sicherheitseinrichtung sind mit a(I) und a(II) bezeichnet.

Schaltungstechnisch läßt sich dies beispielsweise mit Hilfe einer Analogschaltung darstellen, wie sie in Fig. 1 gezeigt ist. Aus zwei Beschleunigungsaufnehmern 11, 12, die beispielsweise mit piezoelektrischen Komponenten ausgestattet sein können, werden Beschleunigungssignale am 1 bzw. am 2 an eine Auswerteeinrichtung 10 weitergegeben, die eine elektronische Analogschaltung umfaßt. Die Eingangssignale am 1 und am 2 werden jeweils aufgezweigt, wobei ein Anteil direkt über einen einstellbaren Widerstand $R_{11}$ bzw. $R_{22}$ in den negativen Eingang eines Operationsverstärkers 15 bzw. 16 durchgeleitet wird, während ein zweiter Anteil jeweils über eine Inverterschaltung 13 bzw. 14 zur Umkehrung des Vorzeichens des Signales und über einen regelbaren Widerstand $R_{21}$ bzw. $R_{12}$ über Kreuz an den negativen Eingang des jeweils anderen Operationsverstärkers 16 bzw. 15 weitergeleitet wird.

Mit Hilfe der einstellbaren Widerstände $R_{11}$, $R_{12}$, $R_{21}$ und $R_{22}$ können die jeweiligen Faktoren $c_{11}$, $c_{12}$, $c_{21}$ und $c_{22}$ aus Gleichung (1) eingestellt werden. Durch geeignete elektronische Elemente, beispielsweise Widerstände $R_I$ und $R_{II}$, sind die Operationsverstärker 15, 16 derart verschaltet, daß die Ausgangssignale a(I) und a(II) auf einen bestimmten Einheitswert normiert sind.

In Fig. 2 ist schematisch eine digitale Auswerteeinrichtung 20 gezeigt, in deren Eingang die Beschleunigungssignale am 1 und am 2 der Beschleunigungsaufnehmer 21 und 22 eingegeben werden. Die analog ankommenden Signale am 1 und am 2 werden über Analog-Digital-Wandler 23 und 24 digitalisiert und einem Rechner, beispielsweise einem Mikroprozessor 25, zugeführt. Dieser ist mit einer Speichereinheit 26 verbunden, die vorzugsweise einen oder mehrere EEPROM-Einheiten enthält. In der Speichereinheit 26 sind die einstellbaren Faktoren $c_{ij}$ zur Ermittlung der Linearkombinationen gemäß Gleichung (1) überschreibbar abgespeichert. Der Mikroprozessor 25 kann damit aus den Eingangssignalen am 1 und am 2 die Ausgangssignale a(I) und a(II) gemäß Gleichung (1) bilden.

Am Ende der Fertigung der Beschleunigungsaufnehmer sind die Konstanten zunächst derart eingestellt, daß $c_{11} = 1$, $c_{12} = 0$, $c_{21} = 0$, $c_{22} = 1$. Mit dieser Einstellung wird dann ein bekanntes Beschleunigungssignal, beispielsweise in x-Richtung aufgebracht, und dabei die Reaktion der beiden Kanäle, die im folgenden mit a(I)x und a(II)y bezeichnet werden sollen, gemessen. Dasselbe wird mit einem bekannten Beschleunigungssignal in y-Richtung vorgenommen, was als Resultat die Ausgangssignale a(I)y und a(II)y zur Folge hat.

Der Einfachheit halber sei im folgenden angenommen, daß die beiden Signale orthogonal und auf "1" normiert seien. Die für eine Korrektur von Winkel und Empfindlichkeit dienenden Faktoren $c_{ij}$ ergeben sich dann zu

$$\{c_{ij}\} = \begin{Bmatrix} a(I)_1 & \dots & a(I)_n \\ : & : & : \\ a(n)_1 & \dots & a(n)n \end{Bmatrix}^{-1}$$

Dabei bedeutet $\{\}^{-1}$ die zu {} inverse Matrix.

Die auf diese Weise bestimmten Faktoren $c_{ij}$ werden durch entsprechende Abstimmung der Widerstände $R_{ij}$ in der Prinzipschaltung nach Fig. 1 eingetragen oder beispielsweise in ein EEPROM in einer Speichereinheit 26 bei einer Digitalschaltung (20) gemäß Fig. 2 eingegeben.

Werden nun reale, vorher nicht bekannte Beschleunigungen in beliebigen Richtungen gemessen, so ergibt die Linearkombination nach Gleichung (1) diejenigen Werte, die durch die Beschleunigungsaufnehmer ermittelt würden, wenn sie auf "1" kalibiriert sind und in einem rechtwinkligen x-y-Koordinatensystem angebracht wären, welches durch die beim Abgleich bestimmten Richtungen festgelegt ist. Auf diese Weise können Empfindlichkeitsabweichungen der Beschleunigungsaufnehmer sowie alle Winkeltoleranzen innerhalb des Gehäuses des Auslösegerätes im gleichen Arbeitsgang auf denkbar einfache Weise kompensiert werden.

Der Abgleich selbst ist natürlich wieder toleranzbehaftet und damit auch die Koeffizienten der Matrix $\{c_{ij}\}$. Dies kann zusätzlich in der Korrektur-Matrix $\{\mathbf{R}_{ij}\}$ erfaßt werden, die die theoretischen, bei den bekannten Beschleunigungssignalen ideal zu erwartenden Werte vorgibt.

Insgesamt kann jedoch von einer deutlichen Verbesserung ausgegangen werden, solange die Richtungen der maximalen Empfindlichkeit der beiden Beschleunigungsaufnehmer hinreichend unterschiedlich sind. Keine Lösung existiert jedoch, wenn die beiden Hauptempfindlichkeitsrichtungen identisch sein sollten. In diesem Fall spannen die beiden Beschleunigungsaufnehmer dann kein Koordinatensystem mehr auf, so daß für die Gleichung (1) keine Lösung mehr existiert.

Abweichungen von der Cosinus-Charakteristik der Beschleunigungsaufnehmer werden mit dem erfindungsgemäßen Verfahren in der Regel nicht kompensiert.

## Patentansprüche

**1.** Verfahren zur richtungsselektiven Auslösung einer passiven Sicherheitseinrichtung in einem Fahrzeug, insbesondere eines Airbag-Systems,

- wobei mindestens zwei Beschleunigungsaufnehmer (11,12; 21,22) und eine Auswerteeinrichtung (10; 20) vorgesehen sind, die die von den Beschleunigungsaufnehmern (11;12;21;22) kommenden Signale am1, am2, ... am n aufnimmt, verarbeitet und im Falle eines Aufpralls des Fahrzeugs Ausgangssignale zur Auslösung der passiven Sicherheitseinrichtung bereitstellt, und
- die Beschleunigungsaufnehmer (11,12;21,22) gerichtete Empfindlichkeitsachsen aufweisen, wobei die Empfindlichkeitsachsen tatsächliche Ist-Ausrichtungen aufweisen und in unterschiedliche, vorzugsweise in vorgegebene Soll-Ausrichtungen ausgerichtet sind und eine Winkeltoleranz zwischen den Soll- und den Ist-Ausrichtungen der Empfindlichkeitsachsen auftritt

**dadurch gekennzeichnet,**

**daß** eine Winkelkorrektur erfolgt, indem die die von den $n \geq 2$ Beschleunigungsaufnehmern (11, 12; 21, 22) kommenden n Signale am 1, am 2, ... am n in n Ausgangssignale a(I), a(II), ... a(n) umwandelt werden, wobei die Ausgangssignale a(I), a(II), ... a(n) Linearkombinationen der ankommenden Signale am 1, am 2, ... am n mit einstellbaren Faktoren $c_{ij}$ sind:

$$a(I) = c_{11} * am\ 1 + c_{12} * am\ 2 + ... + c_{1n} * am\ n$$
$$a(II) = c_{21} * am\ 1 + c_{22} * am\ 2 + ... + c_{2n} * am\ n$$
$$\vdots \qquad \vdots \qquad \qquad \vdots$$
$$a(n) = c_{n1} * am\ 1 + c_{n2} * am\ 2 + ... + c_{nn} * am\ n.$$

**2.** Vorrichtung zur richtungsselektiven Auslösung einer passiven Sicherheitseinrichtung in einem Fahrzeug wobei mindestens zwei Beschleunigungsaufnehmer (11,12;21,22) und eine Auswerteeinrichtung (10;20) vorgesehen sind, die die von den Beschleunigungsaufnehmern (11,12;21,22) kommenden Signale am1, am2,... am n aufnimmt, verarbeitet und im Falle eines Aufpralls des Fahrzeugs Ausgangsignale zur Auslösung der passiven Sicherheitseinrichtung bereitstellt, und
die Beschleunigungsaufnehmer (11,12;21,22) gerichtete Empfindlichkeitsachsen aufweisen, wobei die Empfindlichkeitsachsen tatsächliche Ist-Ausrichtungen aufweisen und in unterschiedliche, vorzugsweise in vorgegebene Soll-Ausrichtungen ausgerichtet sind und eine Winkeltoleranz zwischen den Soll- und den Ist-Ausrichtungen der Empfindlichkeitsachsen auftritt,
**dadurch gekennzeichnet,**
**daß** die Auswerteeinrichtung (10; 20) eine elektronische Schaltung umfaßt, die die von $n \geq 2$ Beschleunigungsaufnehmern (11, 12; 21, 22) kommenden n Signale am 1, am 2, ... am n zur Winkelkorrektur in n Ausgangssignale a(I), a(II), ... a(n) umwandelt, wobei die Ausgangssignale a(I), a(II), ... a(n) Linearkombinationen der ankommenden Signale am 1, am 2, ... am n mit einstellbaren Faktoren $c_{ij}$ sind:

$$a(I) = c_{11} * am\ 1 + c_{12} * am\ 2 + ... + c_{1n} * am\ n$$
$$a(II) = c_{21} * am\ 1 + c_{22} * am\ 2 + ... + c_{2n} * am\ n$$
$$\vdots \qquad \vdots \qquad \qquad \vdots$$
$$a(n) = c_{n1} * am\ 1 + c_{n2} * am\ 2 + ... + c_{nn} * am\ n.$$

**3.** Vorrichtung nach Anspruch 2, **dadurch gekennzeichnet, daß** die elektronische Schaltung mindestens einen Analog-Digital-Wandler (23, 24) zur Digitalisierung der n von den Beschleunigungsaufnehmern (21, 22) kommenden Signale am 1, am 2, ... am n sowie einen Mikroprozessor (25) zur Umwandlung der digitalisierten Signale in die n Ausgangssignale a(I), a(II), ... a(n) umfaßt.

**4.** Vorrichtung nach Anspruch 3, **dadurch gekennzeichnet, daß** der Mikroprozessor (25) mit einer Speichereinheit (26) verbunden ist, in der die einstellbaren Faktoren $c_{ij}$ als digitalisierte Daten abgespeichert sind.

**5.** Vorrichtung nach Anspruch 4, **dadurch gekennzeichnet, daß** die Speichereinheit (26) eine oder mehrere EEPROMEinheiten enthält.

**6.** Vorrichtung nach Anspruch 2, **dadurch gekennzeichnet, daß** die Faktoren $c_{ij}$ durch abstimmbare Ohm'sche Widerstände ($R_{11}$, $R_{12}$, $R_{22}$, $R_{21}$) eingestellt werden können.

**7.** Verfahren zur Bestimmung der Faktoren $c_{ij}$ bei einer Vorrichtung nach einem der Ansprüche 2 bis 6, **gekennzeichnet durch** folgende Verfahrensschritte:

- sequentielle Einprägung von n bekannten Beschleunigungssignalen in n verschiedenen Richtungen in die n Beschleunigungsaufnehmer (11, 12; 21, 22) und Messung der daraus resultierenden n x n Ausgangssignale $a(I)_1$, $a(I)_2$, ... $a(I)_n$; $a(II)_1$, $a(II)_2$, ... $a(II)_n$; ...; $a(n)_1$, $a(n)_2$, ... $a(n)_n$

- Bestimmung der Faktoren $c_{ij}$ aus den gemessenen Ausgangssignalen gemäß

$$\{c_{ij}\} = \{R_{ij}\} \begin{Bmatrix} a(I)_1 & .... & a(I)_n \\ : & : & : \\ a(n)_1 & ... & a(n)n \end{Bmatrix}^{-1}$$

wobei $\{c_{ij}\}$ eine aus den Faktoren $c_{ij}$ aufgebaute n x n-Matrix ist und eine Korrektur-Matrix $\{\mathbf{R}_{ij}\}$ die vorgegebenen theoretischen, bei den bekannten Beschleunigungssignalen ideal zu erwartenden Werte enthält.

8. Verfahren nach Anspruch 7, **dadurch gekennzeichnet, daß** die Korrektur-Matrix $\{\mathbf{R}_{ij}\}$ die Einheitsmatrix {E} ist, wenn die n bekannten Beschleunigungssignale in den n verschiedenen Richtungen orthogonal sind und alle Amplituden der Beschleunigungssignale einen vorgegebenen Einheitswert aufweisen.

## Claims

1. Method for the direction-selective triggering of a passive safety device in a vehicle, in particular an air bag system,

   - wherein at least two acceleration pick-ups (11, 12; 21, 22) and one evaluation device (10; 20) are provided, the latter receiving the signals am 1, am 2, ... am n coming from the acceleration pick-ups (11, 12; 21, 22), processing them and, if the vehicle undergoes an impact, providing output signals for triggering the passive safety device, and
   - the acceleration pick-ups (11, 12; 21, 22) have directional sensitivity axes, wherein the sensitivity axes have actual orientations and are oriented in different, preferably in predetermined desired orientations, and an angular tolerance exists between the desired and the actual orientations of the sensitivity axes,

   **characterised in**
   **that** an angular correction takes place by converting the signals am 1, am 2, ... am n coming from the $n \geq 2$ acceleration pick-ups (11, 12; 21, 22) into n output signals a(I), a(II), ... a(n), wherein the output signals a(I), a(II), ... a(n) are linear combinations of the incoming signals am 1, am 2, ... am n with adjustable factors $c_{ij}$:

$$\begin{aligned} a(I) &= c_{11} * am\ 1 + c_{12} * am\ 2 + ... + c_{1n} * am\ n \\ a(II) &= c_{21} * am\ 1 + c_{22} * am\ 2 + ... + c_{2n} * am\ n \\ \vdots & \quad \vdots \qquad\qquad\qquad\qquad\qquad\qquad\qquad \vdots \\ a(n) &= c_{n1} * am\ 1 + c_{n2} * am\ 2 + ... + c_{nn} * am\ n. \end{aligned}$$

2. Apparatus for the direction-selective triggering of a passive safety device in a vehicle, wherein at least two acceleration pick-ups (11, 12; 21, 22) and one evaluation device (10; 20) are provided, the latter receiving the signals am 1, am 2, ... am n coming from the acceleration pick-ups (11, 12; 21, 22), processing them and, if the vehicle undergoes an impact, providing output signals for triggering the passive safety device, and
   the acceleration pick-ups (11, 12; 21, 22) have directional sensitivity axes, wherein the sensitivity axes have actual orientations and are oriented in different, preferably in predetermined desired orientations, and an angular tolerance exists between the desired and the actual orientations of the sensitivity axes,
   **characterised in**
   **that** the evaluation device (10; 20) comprises an electronic circuit which converts the n signals am 1, am 2, ... am n coming from $n \geq 2$ acceleration pick-ups (11, 12; 21, 22) for angular correction into n output signals a(I), a(II), ... a(n), wherein the output signals a(I), a(II), ... a(n) are linear combinations of the incoming signals am 1, am 2, ... am n with adjustable factors $c_{ij}$:

$$a(I) = c_{11} * am\,1 + c_{12} * am\,2 + \ldots + c_{1n} * am\,n$$
$$a(II) = c_{21} * am\,1 + c_{22} * am\,2 + \ldots + c_{2n} * am\,n$$
$$\vdots \qquad \vdots \qquad \qquad \vdots$$
$$a(n) = c_{n1} * am\,1 + c_{n2} * am\,2 + \ldots + c_{nn} * am\,n.$$

**3.** Apparatus according to Claim 2, **characterised in that** the electronic circuit comprises at least one analogue-digital converter (23, 24) for digitizing the n signals am 1, am 2, ... am n coming from the acceleration pick-ups (21, 22) and a microprocessor (25) for converting the digitized signals into the n output signals a(I), a(II), ... a(n).

**4.** Apparatus according to Claim 3, **characterised in that** the microprocessor (25) is connected to a memory unit (26), in which the adjustable factors $c_{ij}$ are stored as digitized data.

**5.** Apparatus according to Claim 4, **characterised in that** the memory unit (26) contains one or more EEPROM units.

**6.** Apparatus according to Claim 2, **characterised in that** the factors $c_{ij}$ can be adjusted by variable ohmic resistors ($R_{11}$, $R_{12}$, $R_{22}$, $R_{21}$).

**7.** Method for determining the factors $c_{ij}$ in an apparatus according to any one of Claims 2 to 6, **characterised by** the following method steps:

- sequential injection of n known acceleration signals in n different directions into the n acceleration pick-ups (11, 12; 21, 22) and measurement of the resulting n x n output signals $a(I)_1$, $a(I)_2$, ... $a(I)_n$; $a(II)_1$, $a(II)_2$, ... $a(II)_n$; ... $a(n)_1$, $a(n)_2$, ... $a(n)_n$
- determination of the factors $c_{ij}$ from the measured output signals according to

$$\{c_{ij}\} = \{R_{ij}\} \left\{ \begin{matrix} a(I)_1 & \ldots & a(I)_n \\ \vdots & \vdots & \vdots \\ a(n)_1 & \ldots & a(n)_n \end{matrix} \right\}^{-1}$$

where $\{c_{ij}\}$ is a n x n matrix obtained from the factors $c_{ij}$, and a correction matrix $\{R_{ij}\}$ contains the predetermined theoretical values ideally to be expected in the case of the known acceleration signals.

**8.** Method according to Claim 7, **characterised in that** the correction matrix $\{R_{ij}\}$ is the unit matrix {E} when the n known acceleration signals in the n different directions are orthogonal and all amplitudes of the acceleration signals have a predetermined unit value.

## Revendications

**1.** Procédé pour déclencher, d'une manière sélective du point de vue direction, une unité de sécurité passive dans un véhicule, notamment un système d'airbag,

- selon lequel il est prévu au moins deux capteurs d'accélération (11,12;21,22) et un dispositif d'exploitation (10;20), qui reçoivent les signaux am 1, am 2, ...am n qui arrivent des capteurs d'accélération (11,12;21,22), et, dans le cas d'un choc du véhicule, délivrent des signaux de sortie pour le déclenchement du dispositif de sécurité passif, et
- les capteurs d'accélération (11,12;21,22) possèdent des axes de sensibilité dirigés, les axes de sensibilité possédant des orientations réelles effectives et étant orientés avec des orientations de consigne différentes, de préférence avec des orientations de consigne prédéterminées, et une tolérance angulaire apparaissant entre les orientations de consigne et les orientations réelles des axes de sensibilité,

**caractérisé en ce**

**qu'**une correction d'angle est exécutée par le fait que les n signaux am 1, am 2, am n, qui arrivent des n ≥ 2 capteurs d'accélération (11, 12; 21, 22), sont convertis en n signaux de sortie a(I), a(II), ... a(n), les signaux a(I), a(II), ... a(n) étant des combinaisons linéaires des signaux am 1, am 2, ... am n, qui arrivent, avec des facteurs réglables $c_{ij}$ :

$$a(I) = c_{11} * am\ 1 + c_{12} * am\ 2 + \ldots + c_{1n} * am\ n$$
$$a(II) = c_{21} * am\ 1 + c_{22} * am\ 2 + \ldots + c_{2n} * am\ n$$
$$. \qquad .$$
$$. \qquad .$$
$$a(n) = c_{n1} * am\ 1 + c_{n2} * am\ 2 + \ldots + c_{nn} * am\ n.$$

**2.** Dispositif pour déclencher d'une manière sélective du point de vue direction, un dispositif de sécurité passif dans un véhicule,
dans lequel il est prévu au moins deux capteurs d'accélération (11,12;21,22) et un dispositif d'exploitation (10;20), qui reçoivent les signaux am 1, am 2, ...am n qui arrivent des capteurs d'accélération (11,12;21,22), et, dans le cas d'un choc du véhicule, délivrent des signaux de sortie pour le déclenchement du dispositif de sécurité, et
les capteurs d'accélération (11,12;21,22) possèdent des axes de sensibilité dirigés, les axes de sensibilité possédant des orientations réelles effectives et étant orientés avec des orientations de consigne différentes, de préférence avec des orientations de consigne prédéterminées, et une tolérance angulaire apparaît entre les orientations de consigne et les orientations réelles des axes de sensibilité,
**caractérisé en ce**
**que** le dispositif d'exploitation (10;20) comprend un circuit électronique, qui convertit n signaux am 1, am 2, ... am n, qui arrivent de n ≥ 2 capteurs d'accélération (11,12;21,22), pour effectuer la correction d'angle, en n signaux de sortie a(I), a(II), ... a(n), les signaux de sortie a(I), a(II), ... a(n) étant des combinaisons linéaires des signaux am 1, am 2, ... am n, qui arrivent, avec des facteurs réglables $c_{ij}$ :

$$a(I) = c_{11} * am\ 1 + c_{12} * am\ 2 + \ldots + c_{1n} * am\ n$$
$$a(II) = c_{21} * am\ 1 + c_{22} * am\ 2 + \ldots + c_{2n} * am\ n$$
$$. \qquad .$$
$$. \qquad .$$
$$a(n) = c_{n1} * am\ 1 + c_{n2} * am\ 2 + \ldots + c_{nn} * am\ n.$$

**3.** Dispositif selon la revendication 2, **caractérisé en ce que** le circuit électronique comporte au moins un convertisseur analogique/numérique (23,24) servant à numériser les n signaux am 1, am 2, ... am n, qui arrivent des capteurs d'accélération (21,22), ainsi qu'un microprocesseur (25) pour convertir les signaux numérisés en les n signaux de sortie a(I), a(II), ... a(n).

**4.** Dispositif selon la revendication 3, **caractérisé en ce que** le microprocesseur (25) est relié à une unité de mémoire (26), dans laquelle les facteurs réglables $c_{ij}$ sont mémorisés sous la forme de données numérisées.

**5.** Dispositif selon la revendication 4, **caractérisé en ce que** l'unité de mémoire (26) contient une ou plusieurs unités EEPROM.

**6.** Dispositif selon la revendication 2, **caractérisé en ce que** les facteurs $c_{ij}$ peuvent être réglés au moyen de résistances ohmiques accordables ($R_{11}$, $R_{12}$, $R_{22}$, $R_{21}$).

**7.** Procédé pour déterminer les facteurs $c_{ij}$ dans un dispositif selon l'une des revendications 2 à 6, **caractérisé par** les étapes opératoires suivantes :

- injection séquentielle de n signaux d'accélération connus dans n directions différentes dans les n capteurs d'accélération (11,12;21,22) et mesure des n x n signaux de sortie, qui en résultent, $a(I)_1$, $a(I)_2$, ... $a(I)_n$; $a(II)_1$,

$a(II)_n$; ... $a(II)_n$; ...; $a(n)_1$, $a(n)_2$, ... $a(n)_n$,

- détermination des facteurs $c_{ij}$ à partir des signaux de sortie mesurés conformément à :

$$\{c_{ij}\} = \{R_{ij}\} \begin{Bmatrix} a(i)_1 & \ldots & a(I)_n \\ . & . & . \\ a(n)_1 & \ldots & a(n)n \end{Bmatrix}^{-1}$$

$\{c_{ij}\}$ étant une matrice n x n constituée par les facteurs $c_{ij}$, et une matrice de correction $\{R_{ij}\}$ contenant les valeurs théoriques prédéterminées, à laquelle il faut s'attendre d'une manière idéale dans le cas des signaux d'accélération connus.

**8.** Procédé selon la revendication 7, **caractérisé en ce que** la matrice de correction $\{R_{ij}\}$ est la matrice unité $\{E\}$ lorsque les n signaux d'accélération connus sont orthogonaux dans les n directions différentes et que toutes les amplitudes des signaux d'accélération possèdent une valeur unité prédéterminée.

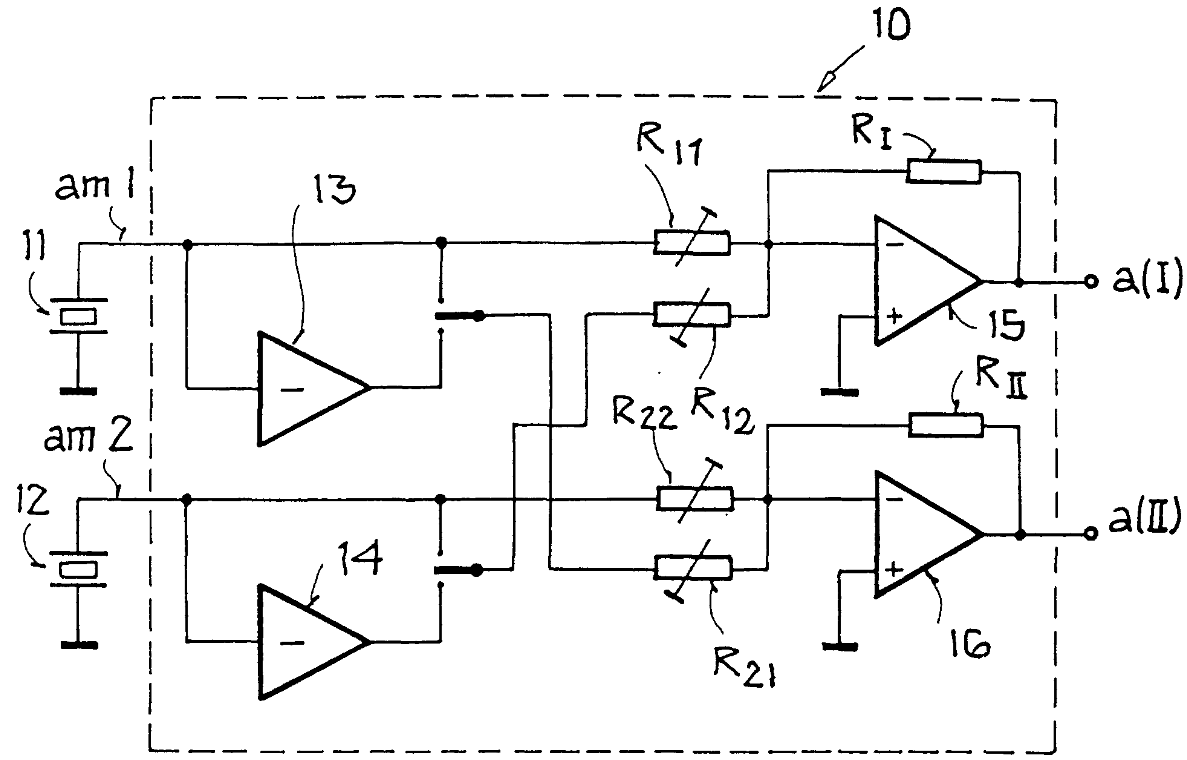
10
am 1
11
13
$R_{11}$
$R_I$
a(I)
15
am 2
12
$R_{22}$
$R_{12}$
$R_{II}$
14
a(II)
$R_{21}$
16

FIG. 1

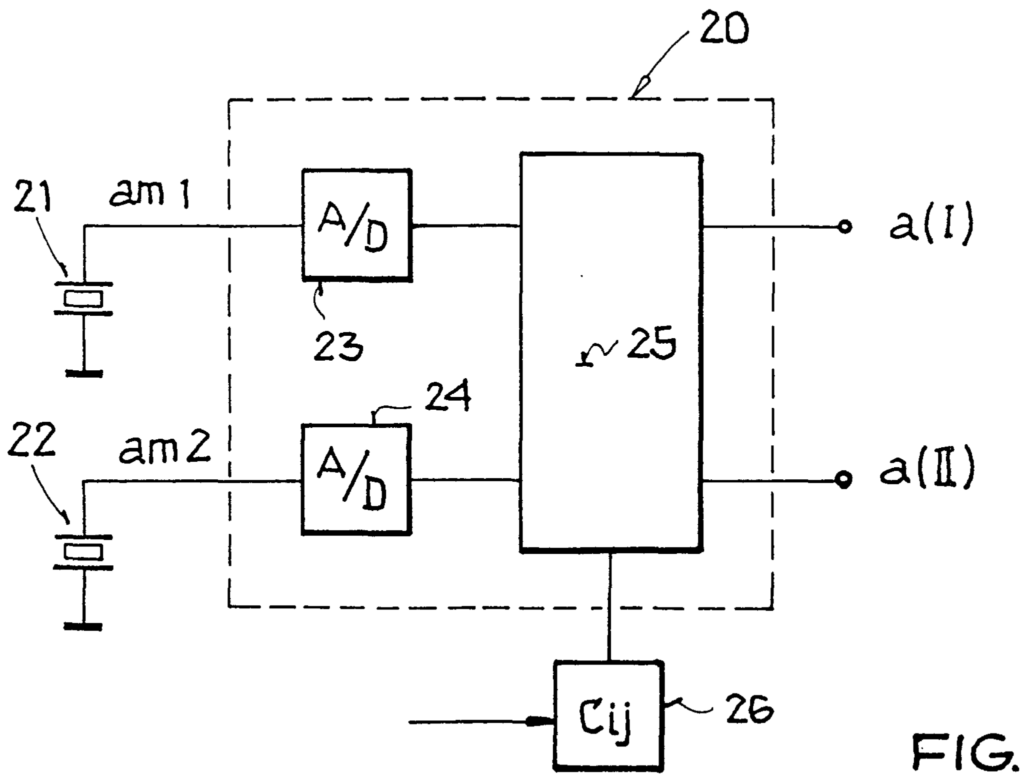
20
21
am 1
A/D
a(I)
23
25
24
22
am 2
A/D
a(II)
Cij
26

FIG. 2

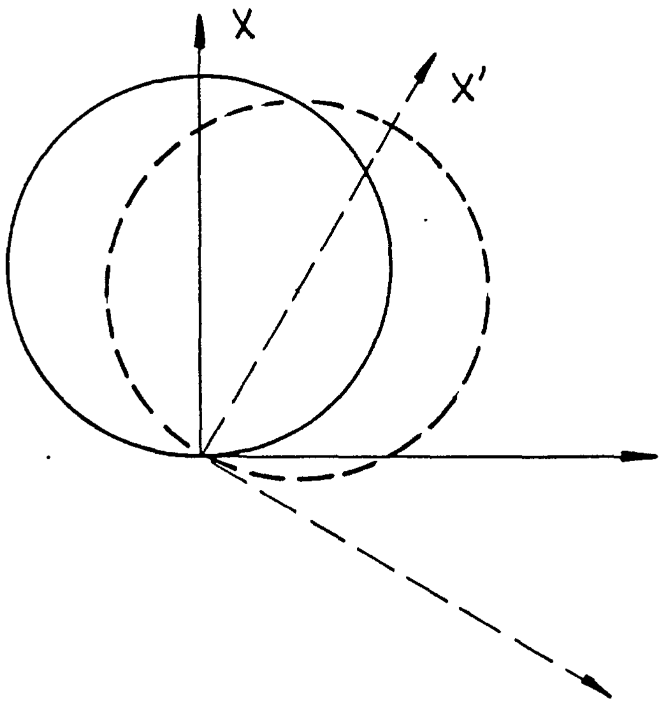


FIG.3